# EUROPEAN PATENT APPLICATION

(11) **EP 4 775 764 A1**
(43) Date of publication of application: **15.07.2026**
(21) Application number: 25743683.2
(22) Date of filing: 29.04.2025
(51) Int. Cl.: E04H 12/24, H02G 7/20, E04H 12/00, H02G 7/05, H01B 17/16

(54) **COMPOSITE CROSS ARM AND POWER TRANSMISSION POLE**

(30) Priority: 22.11.2024 CN 202411689129
(71) Applicant: Jiangsu Shemar Electric Co., Ltd., Nantong City, Jiangsu 226017 (CN)
(72) Inventor: GU, Yanan, Nantong, Jiangsu 226017 (CN); HUANG, Qing, Nantong, Jiangsu 226017 (CN); DE SANTOS YUBERO, Héctor, Nantong, Jiangsu 226017 (CN); XIA, Fa, Nantong, Jiangsu 226017 (CN); SHI, Jiafeng, Nantong, Jiangsu 226017 (CN)
(74) Representative: HGF
(86) International application number: PCT/CN2025/092009
(87) International publication number: WO 2026/108096

(57) **Abstract**

The present application discloses a composite crossarm, including: two first crossarms, first middle portions thereof being respectively fixed on two sides of an electric pole, and length directions thereof being located in a same horizontal plane and parallel to each other; two first connecting assemblies, corresponding end portions of the two first crossarms being connected together through the first connecting assemblies, and two ends of each first connecting assembly being respectively configured to be connected to two first clamps; a second connecting assembly, corresponding second middle portions of the two first crossarms being connected together through the second connecting assembly and the second connecting assembly being configured to be connected to a second clamp, and located below the first crossarms; and two tension members having one ends respectively connected to the first middle portions of the two first crossarms, and another ends respectively configured to be connected to the first clamps, and length directions of the tension members and the length directions of the first crossarms being located in the same horizontal plane and perpendicular to each other. In the composite crossarm according to the present application, a fully insulated horizontal structure is adopted, and a fixed jumper is attached below the crossarm, so that accidents such as tripping caused by an electric shock to birds can be prevented, safety is higher, and operation and maintenance costs are lower. The present application further discloses a power transmission pole.

## Description

### TECHNICAL FIELD

The present application relates to the field of overhead power transmission line technologies, and in particular, to a composite crossarm and a power transmission pole.

### BACKGROUND

A crossarm is an assembly in an overhead line mounted on an electric pole and has a main function of supporting a conductor. A steel crossarm is adopted in a conventional power transmission pole, and an insulator is mounted on the steel crossarm to attach the conductor. When the conductor is a bare conductor, when taking off from or landing on the power transmission pole, birds may simultaneously contact any two conductors or any conductor and the steel crossarm to form an energized circuit to cause an electric shock, which may directly affect the normal operation of power infrastructure, resulting in accidents such as tripping, while also causing deaths of the birds and reducing biodiversity. Meanwhile, in a tension steel crossarm, the middle thereof is usually raised to mount a middle phase jumper to guarantee an insulation distance between the middle phase jumper and other electrified structures, but the middle phase jumper is usually in a form of a free jumper. The free jumper may experience a serious wind deflection during a large wind load, so that it is difficult to ensure a sufficient insulation distance, and the birds are prone to be shocked electrically to cause a power accident.

Currently, an insulating sheath is usually mounted on an outer periphery of the bare conductor adjacent to the electric pole to protect the birds from being electrically shocked, but such a protective mode is expensive and has poor long-term effectiveness in use, requiring regular replacement and maintenance, resulting in high operation and maintenance costs.

### SUMMARY

As for the defects of the prior art, an object of the present application is to provide a composite crossarm, in which a fully insulated horizontal structure is adopted, and a fixed middle phase jumper is attached below the crossarm, so that accidents such as tripping caused by an electric shock to birds can be effectively prevented, safety is higher, and operation and maintenance costs are lower.

In order to achieve the above object, the following technical solution is adopted in the present application: a composite crossarm includes: two first crossarms, first middle portions of the two first crossarms being respectively fixed on two sides of an electric pole, and length directions of the two first crossarms being located in a same horizontal plane and parallel to each other; two first connecting assemblies, corresponding end portions of the two first crossarms being connected together through the first connecting assemblies, and two ends of each first connecting assembly being respectively configured to be connected to two first clamps; a second connecting assembly, corresponding second middle portions of the two first crossarms being connected together through the second connecting assembly, and the second connecting assembly being configured to be connected to a second clamp, and the second clamp being located below the first crossarms; and two tension members, each of which has one end connected to the first middle portion of one of the two first crossarms, and the other end configured to be connected to one of the first clamps, and length directions of the tension members and the length directions of the first crossarms being located in the same horizontal plane and perpendicular to each other.

In an embodiment, each of the first crossarms includes a core rod, a connecting fitting, an intermediate fitting, two end fittings and an insulating layer. The connecting fitting is connected to a first middle portion of the core rod and configured to be connected to the tension member and the electric pole; the intermediate fitting is connected to a second middle portion of the core rod and configured to be connected to the second connecting assembly; the two end fittings are respectively connected to two ends of the core rod and configured to be connected to the first connecting assemblies; and the insulating layer covers at least a part of an outer periphery surface of the core rod.

In an embodiment, the connecting fitting is a cross-shaped fitting. The connecting fitting includes a first sleeve and an electric pole connecting member. The first sleeve is sleeved on the first middle portion of the core rod. The electric pole connecting member is perpendicularly connected to the first sleeve, and the electric pole connecting member is configured to be connected to the electric pole.

In an embodiment, the electric pole connecting member includes two first connecting members. The two first connecting members are perpendicularly connected to a middle portion of the first sleeve and located on two sides of the first sleeve with respect to an axial direction, respectively. The first connecting members is configured to be connected to the electric pole.

In an embodiment, the first connecting member includes a first plate member and two second plate members. The first plate member and the second plate members are perpendicularly connected to each other. The two second plate members extend from two ends of the first plate member in a same direction away from the first plate member. One end of each of the two second plate members not connected to the first plate member is perpendicularly connected to the first sleeve; the second plate member is provided with a first connecting hole configured for being connected to the electric pole.

In an embodiment, a tension connecting portion is arranged on a side of the first sleeve away from the electric pole. The tension connecting portion is provided with a second connecting hole configured to be connected to the tension member.

In an embodiment, each of the tension members is a tension composite insulator or a tension fitting.

In an embodiment, the intermediate fitting includes a second sleeve and a second connecting member. The second sleeve is sleeved on the second middle portion of the core rod. The second connecting member is connected to a bottom side of the second sleeve. The second connecting member is provided with third connecting holes configured to be connected to the second connecting assembly.

In an embodiment, each of the end fittings includes an end sleeve and a third connecting member. The end sleeve is sleeved on an end portion of the core rod, and the third connecting member is connected to a top end of the end sleeve. The third connecting member is provided with fourth connecting holes configured to be connected to the first connecting assembly.

In an embodiment, the composite crossarm further includes an insulating protection cover configured for covering metal structures at a top of the electric pole and at a middle portion of the composite crossarm.

In an embodiment, the insulating protection cover includes a first protection cover and a second protection cover. The first protection cover is configured to cover the metal structures at the top of the electric pole and an upper side of the middle portion of the composite crossarm. The second protection cover is configured to cover the metal structures on a lower side of the middle portion of the composite crossarm. A top of the first protection cover is of a pinnacle structure.

In an embodiment, the composite crossarm is configured to attach conductors and jumpers. The jumpers extend below and are attached below the composite crossarm.

In an embodiment, the conductors include a middle phase conductor. The middle phase conductor is respectively attached on the first clamps connected to the two tension members on two sides of the electric pole. A middle phase jumper is led out from one of the first clamps connected to one of the tension members, extends below the composite crossarm to be attached on the second clamp, and then extends below the composite crossarm to be attached on the other of the first clamps connected to the other of the tension members. The middle phase jumper is electrically connected to the middle phase conductor.

In an embodiment, the conductors include edge phase conductors. Each of the edge phase conductor is respectively attached on the two first clamps connected to the two ends of the first connecting assembly on the two sides of the electric pole. An edge phase jumper is led out from one of the first clamps connected to one end of the first connecting assembly and extends below the composite crossarm to be attached on the other of the first clamps connected to the other end of the first connecting assembly. The edge phase jumper is electrically connected to the edge phase conductor.

A second object of the present application is to provide a power transmission pole, including an electric pole and the composite crossarm as described above. The composite crossarm is fixed on the electric pole.

The present application has the following beneficial effects: different from the prior art, the composite crossarm according to the present application integrally has a fully insulated horizontal structure, and the fixed middle phase jumper is attached below the composite crossarm through the second connecting assembly, so that a wind deflection risk caused by adopting a free jumper at the middle portion of the composite crossarm can be avoided, insulation distances between the conductors at a high-voltage end and between the conductors and the top of the electric pole at a low-voltage end of the power transmission pole are ensured, an energized circuit cannot be not formed no matter where the birds take off, stand or land on the power transmission pole, the accidents such as the tripping caused by the electric shock to the birds are effectively prevented, the safety is higher, the operation and maintenance costs are lower. Meanwhile, the probability of electric shock death when the birds land on the power transmission pole can be effectively reduced, protecting biodiversity. In addition, an assembled structure of two horizontal crossarms is adopted in the composite crossarm, and the composite crossarm can be applied to electric poles of more specifications by selecting first connecting assemblies and second connecting assemblies of different specifications, so that the mounting is more flexible, and the versatility is higher.

Meanwhile, in the composite crossarm according to the present application, the metal structures at the top of the electric pole and at the middle portion of the composite crossarm are covered with the insulating protection cover, so that an insulating effect on the top of the electric pole can be enhanced to further reduce the probability of the electric shock death of the birds.

In addition, compared with a conventional steel crossarm, in the present application, by directly attaching the edge phase conductors by means of the first connecting assemblies of the composite crossarm, insulator structures at two ends can be omitted, and the crossarm is simpler in structure, more convenient to mount, less prone to corrosion and longer in service life.

### BRIEF DESCRIPTION OF THE DRAWINGS

FIG. 1 is a schematic structural view of a power transmission pole 1000 in an embodiment of the present application;
FIG. 2 is a schematic structural view of a first crossarm 100 in an embodiment of the present application;
FIG. 3 is a schematic structural view of a connecting fitting 120 in an embodiment of the present application;
FIG. 4 is a schematic partial structural view of the first crossarm 100 in an embodiment of the present application;
FIG. 5 is a schematic structural view of an end fitting 140 in an embodiment of the present application; and
FIG. 6 is a schematic partial structural view of a power transmission pole 1000 in another embodiment of the present application.

### DETAILED DESCRIPTION

As required, detailed embodiments of the present application will be disclosed herein. However, it is to be understood that the disclosed embodiments are merely exemplary examples of the present application, and may be embodied in various forms. Therefore, specific details disclosed herein are not to be interpreted as limiting, but merely as a basis for the claims and as a representative basis for teaching those skilled in the art to variously apply the present application in virtually any appropriate manner, including employing various features disclosed herein and combining with other features that may not be explicitly disclosed herein.

The term "connection" as used herein, unless otherwise expressly specified or limited, is to be construed broadly, and can be either a direct connection or a connection through an intermediate medium. In descriptions of the present application, it should be understood that, directions or positional relationships indicated by terms "upper", "lower", "end portion", "an end", etc. are based on orientations or positional relationships shown in the accompanying drawings, and they are used only for describing the present application and for description simplicity, but do not indicate or imply that an indicated device or element must have a specific orientation or be constructed and operated in a specific orientation. Therefore, it cannot be understood as a limitation on the present application.

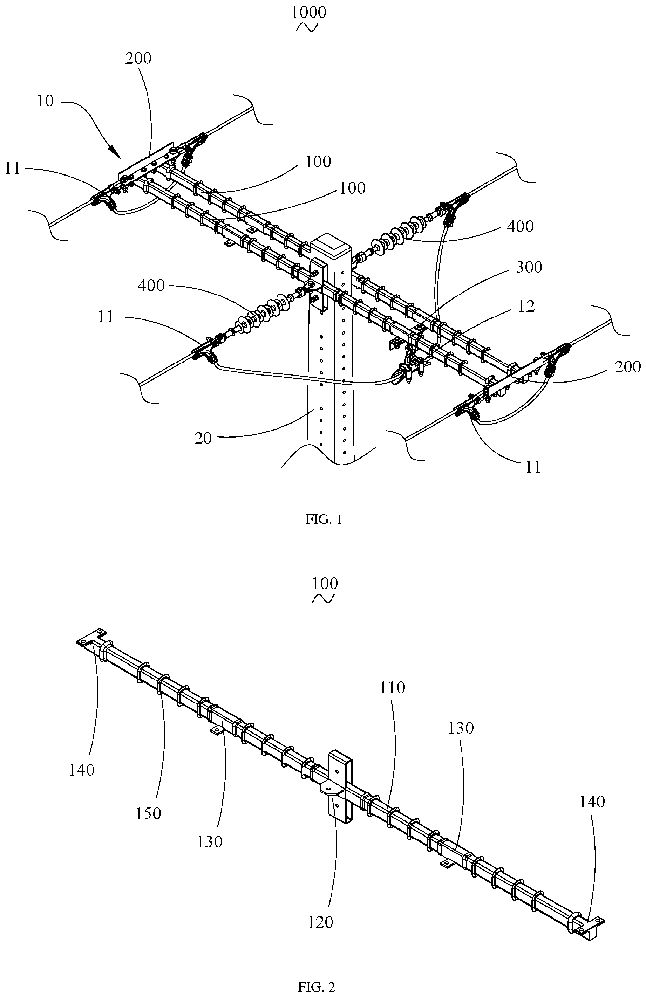

As shown in FIG. 1, the present application provides a power transmission pole 1000, the power transmission pole 1000 is a tension pole, the tension pole includes a composite crossarm 10 and an electric pole 20. The composite crossarm 10 is fixed on the electric pole 20. In an electrical power system, the tension pole is a support for segmenting a line to control the extent within which the pole falls and the conductor is broken. In the tension pole, tension assemblies and tension clamps are arranged on the crossarm to attach conductors.

The composite crossarm 10 includes two first crossarms 100, two first connecting assemblies 200, a second connecting assembly 300 and two tension members 400. First middle portions of the two first crossarms 100 are respectively fixed on two sides of the electric pole 20. Length directions of the two first crossarms 100 are located in a same horizontal plane and parallel to each other. End portions of the two first crossarms 100 corresponding to each other are connected together through the first connecting assemblies 200. Two ends of each first connecting assembly 200 are respectively configured to be connected to two first clamps 11 to attach an edge phase conductor and an edge phase jumper; corresponding second middle portions of the two first crossarms 100 are connected together through the second connecting assembly 300 and configured to be connected to a second clamp 12 to attach a middle phase jumper. The second clamp 12 is located below the first crossarms 100, and one end of each of the two tension members 400 is connected to the first middle portion of one of the two first crossarms 100, the other end of each of the two tension members 400 is configured to be connected to the first clamp 11, to attach a middle phase conductor and the middle phase jumper. The length directions of the tension members 400 and the length directions of the first crossarms 100 are located in the same horizontal plane and perpendicular to each other.

In the power transmission pole 1000 according to the present application, the composite crossarm 10 is used to attach the conductors, the composite crossarm 10 integrally has a fully insulated horizontal structure, and the fixed middle phase jumper is attached below the composite crossarm 10 through the second connecting assembly 300, so that a wind deflection risk caused by adopting a free jumper at the middle portion of the composite crossarm 10 can be avoided, insulation distances between the conductors at a high-voltage end and between the conductors and the top of the electric pole 20 at a low-voltage end of the power transmission pole 1000 are ensured, an energized circuit cannot be not formed no matter where birds take off, stand or land on the power transmission pole 1000, accidents such as tripping caused by an electric shock to the birds are effectively prevented, safety is higher, operation and maintenance costs are lower, and meanwhile, the probability of electric shock death when the birds land on the power transmission pole 1000 can be effectively reduced, protecting biodiversity. In a conventional solution, in the tension pole, suspension insulators are arranged on a steel crossarm to attach the conductors, in the present application, by directly attaching the edge phase conductors through using the first connecting assemblies 200 of the composite crossarm 10, insulator structures at two ends can be omitted, and the crossarm is simpler in structure, more convenient to mount, less prone to corrosion and longer in service life.

It should be noted that each of the first middle portion and the second middle portion, as used herein, refers to the part between the two ends, and is not strictly the central part. The second middle portion of the first crossarm 100 is located between the first middle portion of the first crossarm 100 and an end portion thereof.

As shown in FIG. 2, the first crossarm 100 includes a core rod 110 (the reference numeral is only for illustration), a connecting fitting 120, an intermediate fitting 130, two end fittings 140 and an insulating layer 150. The connecting fitting 120 is connected to a first middle portion of the core rod 110 and configured to be connected to the tension member 400 and the electric pole 20; the intermediate fitting 130 is connected to a second middle portion of the core rod 110 and configured to be connected to the second connecting assembly 300; the two end fittings 140 are respectively connected to two ends of the core rod 110 and configured to be connected to the first connecting assemblies 200; and the insulating layer 150 coves at least a part of an outer periphery surface of the core rod 110.

The core rod 110 is made of composite materials, for example, formed by impregnating glass fibers or aramid fibers with epoxy resin and then subjecting impregnated glass fibers or aramid fibers to pultrusion. Compared with metal materials of conventional crossarms, the composite materials are more corrosion-resistant, have lower costs, and can realize a great reduction in weight, so that the composite crossarm 10 is more convenient to mount.

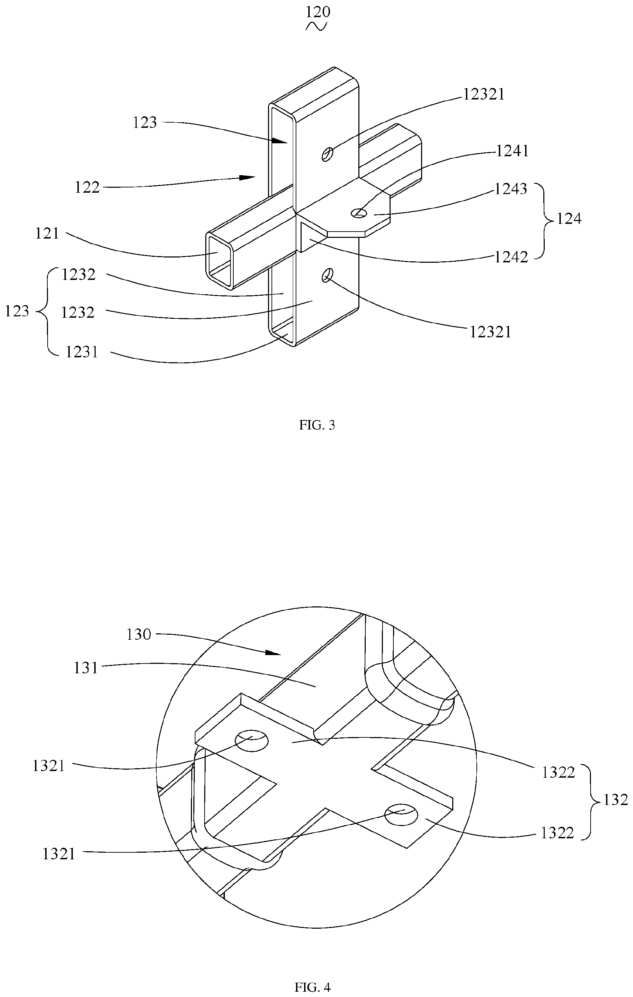

As shown in FIG. 3, the connecting fitting 120 is a cross-shaped fitting. The connecting fitting 120 includes a first sleeve 121 and an electric pole connecting member 122. The first sleeve 121 is sleeved on the first middle portion of the core rod 110. That is, the first sleeve 121 is of a hollow tube structure, sleeved on an outer periphery of the first middle portion of the core rod 110, and is fixed on the core rod 110 through a crimping process. The electric pole connecting member 122 is perpendicularly connected to the first sleeve 121 and configured to fix the first crossarm 100 to the electric pole 20.

The electric pole connecting member 122 includes two first connecting members 123, the two first connecting members 123 being perpendicularly connected to the middle portion of the first sleeve 121 and located on two sides of the first sleeve 121 with respect to an axial direction thereof, respectively. The first connecting members 123 are configured to be connected to the electric pole 20.

The first connecting member 123 includes a first plate member 1231 and two second plate members 1232, the first plate member 1231 and the second plate members 1232 being perpendicularly connected. The two second plate members 1232 respectively extend from two ends of the first plate member 1231 in a same direction away from the first plate member 1231. An end of each of the two second plate members 1232 not connected to the first plate member 1231 is perpendicularly connected to the first sleeve 121. Each of the two second plate members 1232 is provided with a first connecting hole 12321 configured for being connected to the electric pole 20. Two first connecting holes 12321 are coaxially arranged, and have penetrating directions perpendicular to plate surfaces of the second plate members 1232. The electric pole 20 is provided with first mounting holes (not shown in the drawing) correspondingly matched with the first connecting holes 12321. The connecting fitting 120 can be in matched connection with the electric pole 20 by inserting fasteners such as bolts and screws into the corresponding first connecting holes 12321 and first mounting holes. That is, holes do not need to be drilled in the first sleeve 121 and the core rod 110 for connection, thus avoiding the mechanical properties of the core rod 110 from being affected by drilling holes, thereby avoiding potential electric-power safety hazards. In addition, each of the first connecting members 123 is configured to be of a hollowed structure, which can reduce the weight of the connecting fitting 120 and reduce costs while ensuring the connecting strength.

A tension connecting portion 124 is arranged on a side of the first sleeve 121 away from the electric pole 20. The tension connecting portion 124 is provided with a second connecting hole 1241 configured to be connected to the tension member 400. The tension connecting portion 124 may be arranged at the middle portion of the first sleeve 121, so that the tension member 400 is more uniformly stressed after being mounted.

The tension connecting portion 124 is an L-shaped plate member and includes a third plate member 1242 and a fourth plate member 1243 that are perpendicularly connected to each other. The third plate member 1242 is closely attached to a plate surface of the first sleeve 121 away from the electric pole 20 in a vertical direction; the fourth plate member 1243 is arranged in a horizontal direction and extends in a direction away from the first sleeve 121. An end of the fourth plate member 1243 connected to the third plate member 1242 is also connected to the first sleeve 121. The fourth plate member 1243 is provided with a second connecting hole 1241. A penetrating direction of the second connecting hole 1241 is perpendicular to a plate surface direction of the fourth plate member 1243, so as to be connected to the tension member 400 through a connecting member such as an eye. The third plate member 1242 can enhance the connecting strength between the fourth plate member 1243 and the first sleeve 121, so that the tension member 400 can be mounted more stably. Further, a thickness of the fourth plate member 1243 in the vertical direction is less than a height of the first sleeve 121 in the vertical direction, which can reduce the weight of the connecting fitting 120 and reduce costs while ensuring the connecting strength of the tension member 400.

As shown in FIG. 4, the intermediate fitting 130 includes a second sleeve 131 and a second connecting member 132. The second sleeve 131 is sleeved on the second middle portion of the core rod 110. The second connecting member 132 is connected to a bottom side of the second sleeve 131. The second connecting member 132 is provided with third connecting holes 1321 configured to be connected to the second connecting assembly 300 through fasteners such as bolts and screws, so that there is no need to drill holes on the second sleeve 131 and the core rod 110 for connection, thus avoiding that the mechanical properties of the core rod 110 from being affected by drilling holes, thereby avoiding the potential electric-power safety hazards.

The second connecting member 132 includes two fifth plate members 1322. The fifth plate members 1322 are connected to the bottom side of the second sleeve 131 and extend away from the second sleeve 131 in the horizontal direction. The two fifth plate members 1322 are symmetrically arranged with respect to an axis of the second sleeve 131. That is, the two fifth plate members 1322 are arranged away from each other in a horizontal plane where a bottom surface of the second sleeve 131 is located. The third connecting hole 1321 is arranged on the fifth plate member 1322. A penetrating direction of the third connecting hole 1321 is perpendicular to a plate surface direction of the fifth plate member 1322. Further, the fifth plate members 1322 are located at the middle portion of the second sleeve 131, so that the second connecting assembly 300 is stressed more uniformly after being mounted. A thickness of the fifth plate member 1322 in the vertical direction is less than a height of the second sleeve 131 in the vertical direction, which can reduce the weight of the second intermediate fitting 130 and reduce costs while ensuring the connecting strength of the second connecting assembly 300. The configuration of the second sleeve 131 and the mode of connection between the second sleeve 131 and the core rod 110 are similar to those of the first sleeve 121.

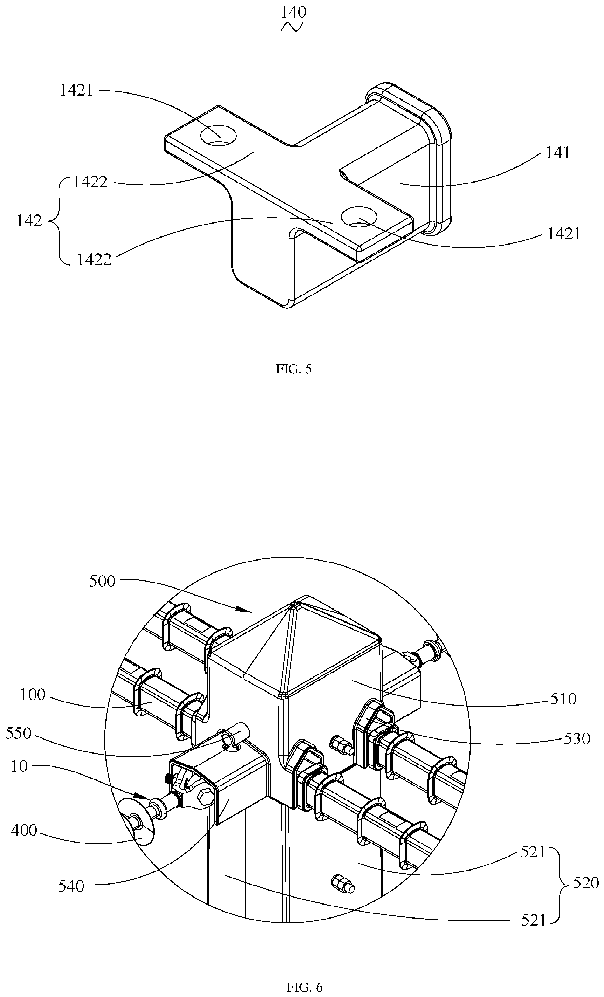

As shown in FIG. 5, the end fitting 140 includes an end sleeve 141 and a third connecting member 142. The end sleeve 141 is sleeved on an end portion of the core rod 110. The third connecting member 142 is connected to a top end of the end sleeve 141. The third connecting member 142 is provided with fourth connecting holes 1421 configured to be connected to the first connecting assembly 200 through fasteners such as bolts and screws. That is, there is no need to drill holes on the end sleeve 141 and the core rod 110 for connection, thus avoiding that the mechanical properties of the core rod 110 from being affected by drilling holes, thereby avoiding the potential electric-power safety hazards.

The end sleeve 141 is of a hollow pipe structure with one end closed, an open end of the end sleeve 141 is sleeved on an outer periphery of an end portion of the core rod 110. The end sleeve 141 is fixed on the end portion of the core rod 110 by a crimping process.

The third connecting member 142 includes two sixth plate members 1422. The sixth plate members 1422 are connected to a top side of the end sleeve 141 and extend away from the end sleeve 141 in the horizontal direction. The two sixth plate members 1422 are symmetrically arranged with respect to an axis of the end sleeve 141. That is, the two sixth plate members 1422 are arranged away from each other in a horizontal plane where a top surface of the end sleeve 141 is located. The fourth connecting hole 1421 is arranged on the sixth plate member 1422, and a penetrating direction of the fourth connecting hole 1421 is perpendicular to a plate surface direction of the sixth plate member 1422. Further, the third connecting member 142 is located on a top side of an end of the end sleeve 141 not connected to the core rod 110, so as to reserve a position for crimping the end sleeve 141 and the core rod 110, and ensure the connecting strength between the end fitting 140 and the core rod 110. A thickness of the sixth plate member 1422 in the vertical direction is less than a height of the end sleeve 141 in the vertical direction, which can reduce the weight of the end fitting 140 and reduce costs while ensuring the connecting strength of the first connecting assembly 200.

The insulating layer 150 includes a sheath. The insulating layer 150 is located on outer periphery of other regions of the core rod 110, excluding the regions occupied by the connecting fitting 120, the intermediate fitting 130 and the end fittings 140. Hermetic connections are adopted between the insulating layer 150 and the connecting fitting 120, between the insulating layer 150 and the intermediate fitting 130, and between the insulating layer 150 and the end fittings 140, so that the core rod 110 can be effectively prevented from being damaged by invading of external moisture, and the service life of the first crossarm 100 is prevented from being affected. Further, the insulating layer 150 further includes sheds arranged on the sheath and spaced apart, which can increase the creepage distance of an outer surface of the first crossarm 100. In addition, the arrangement of the sheds may prevent the birds from nesting, thereby improving the electrical safety of the whole first crossarm 100.

In an embodiment, the insulating layer 150 is made of high-temperature vulcanized silicone rubber, and a silicone rubber material is coated on the outer periphery of the core rod 110 by an integral vacuum injection molding process to overall form the high-temperature vulcanized silicone rubber insulating layer. The high-temperature vulcanized silicone rubber has good aging resistance and hydrophobic migration property, and can reduce pollution flashover probability and rain flashover probability, and improve the electrical safety of the first crossarm 100. In other embodiments, the insulating layer may alternatively be formed by a mold pressing process or may be pre-formed and then be sleeved on the outer periphery of the core rod, which is not specifically limited herein.

Shapes and sizes of cross-sections of the first sleeve 121, the second sleeve 131, and the end sleeves 141 are matched with those of a cross-section of the core rod 110. In an embodiment, the cross-section of the core rod 110 is square, and each sleeve is a square tube, so that each sleeve can be conveniently fixed to the core rod 110, a contact area between each sleeve and the core rod 110 can be increased, and the connecting strength between the connecting fitting 120, the intermediate fitting 130, and the end fittings 140 and the core rod 110 can be ensured. In other embodiments, the cross-section of the core rod may be circular, T-shaped, or I-shaped, and each sleeve may be a circular tube, a T-shaped tube, or an I-shaped tube, as long as it can be matched with the core rod, which is not specifically limited herein.

In an embodiment, the connecting fitting 120, the intermediate fitting 130, and the end fittings 140 may be made of metal (such as iron, steel, and aluminum), the materials are convenient to obtain, and the costs are low. In addition, each of the connecting fitting 120, the intermediate fitting 130, and the end fittings 140 is formed by separately forming fitting components and then connecting them together by welding, so that the connection is reliable, and the manufacturing is simple and convenient. In other embodiments, the fittings may be integrally formed by casting, or the like, as long as the connecting strength between the components can be ensured, which is not specifically limited herein.

As shown in FIG. 1 and FIG. 5 together, the top sides of the end fittings 140 corresponding to the two first crossarms 100 are connected together by the first connecting assemblies 200, for connection with the first clamps 11. The first connecting assembly 200 is an angle steel member, a cross-section of the first connecting assembly 200 is L-shaped. Two groups of second mounting holes (not shown in the drawing) are arranged on the first connecting assembly 200 and spaced apart, each group includes two second mounting holes, and the two second mounting holes are arranged corresponding to the two fourth connecting holes 1421 on the end fitting 140, so that the end fittings 140 corresponding to the two first crossarms 100 are connected together through the first connecting assemblies 200. Each of the two ends of the first connecting assembly 200 is further provided with a third mounting hole (not shown in the drawing) configured for being connected to the first clamp 11 by a shackle, or the like. That is, the two first clamps 11 are connected to two ends of the first connecting assembly 200 respectively. During mounting, the two first crossarms 100 are horizontally placed; the end portions of the two first crossarms 100 correspond to each other; one of the first connecting assemblies 200 is placed above the end fittings 140 at corresponding one ends of the two first crossarms 100, so that the two groups of second mounting holes on the first connecting assembly 200 are respectively aligned with the fourth connecting holes 1421 on the two end fittings 140; and fasteners such as bolts and nuts that cooperate with each other are inserted into the corresponding second mounting holes and fourth connecting holes 1421 and tightened, so that the end fittings 140 corresponding to the two first crossarms 100 are connected to the same first connecting assembly 200, and the corresponding one ends of the two first crossarms 100 are connected together. Then, the two shackles are respectively connected to the two third mounting holes. Then, the two first clamps 11 are respectively connected to the two shackles, and the assembling of the corresponding one ends of the two first crossarms 100 is completed. Finally, corresponding the other ends of the two first crossarms 100 are connected together in the above manner, and tightening between the shackle and the first clamp 11 can be realized by fasteners such as bolts and nuts.

As shown in FIG. 1 and FIG. 4 together, bottom sides of the intermediate fittings 130 corresponding to the two first crossarms 100 are connected together by the second connecting assembly 300, for connection to the second clamp 12, so as to fix and attach the middle phase jumper. The second connecting assembly 300 is an angle steel member, a cross-section of the second connecting assembly 300 is L-shaped. Two groups of fourth mounting holes (not shown in the drawing) are arranged on the second connecting assembly 300 and spaced apart, each group includes two fourth mounting holes. The two fourth mounting holes are arranged corresponding to the two third connecting holes 1321 on the intermediate fitting 130, so that the intermediate fittings 130 corresponding to the two first crossarms 100 are connected together through the second connecting assembly 300. The middle portion of the second connecting assembly 300 is further provided with a fifth mounting hole (not shown in the drawing) configured for being connected to the second clamp 12 by a shackle, or the like. That is, the second clamp 12 is connected to a bottom side of the middle portion of the second connecting assembly 300. A specific mounting process thereof is similar to that of the first connecting assembly 200, and is not repeated.

In the composite crossarm 10, the first crossarms 100 are fixed on the electric pole 20 through the connecting fittings 120, and the two first crossarms 100 are connected together through the first connecting assemblies 200 and the second connecting assembly 300, so as to attach the conductors. That is, an assembled structure of two horizontal crossarms is adopted in the composite crossarm 10, and the composite crossarm 10 can be applied to electric poles 20 of more specifications by selecting first connecting assemblies 200 and second connecting assemblies 300 of different specifications, so that the mounting is more flexible, and the versatility is higher.

As shown in FIG. 1 and FIG. 3 together, one end of each of the two tension members 400 is connected to one of the two connecting fittings 120 through a ball-clevis, a shackle, or the like, and the other end of each of the two tension members 400 is connected to the first clamp 11 through a socket-clevis eye, or the like. During mounting, the two ball-clevises or the two shackles are connected to the second connecting holes 1241 of the two tension connecting portions 124 respectively, and then one end of each of the two tension members 400 is connected to one of the two ball-clevises or the two shackles respectively, and then, the two socket-clevis eyes are connected to the other ends of the two tension members 400 respectively, and finally, the two first clamps 11 are connected to the two socket-clevis eyes respectively. Connection and tightening of the above components can be realized by fasteners such as bolts and nuts.

In an embodiment, the tension member 400 may be a tension composite insulator in the prior art; and the ball-clevis, the shackle, and the socket-clevis eye are connecting members matched with fittings at two ends of the tension composite insulator in the prior art. For example, when the fitting at one end of the tension composite insulator is a ball-socket fitting, the socket-clevis eye is selected for connection correspondingly. When the fitting at one end of the tension composite insulator is a Y-shaped fitting, the shackle is selected for connection correspondingly. The first clamp 11 may be a tension clamp in the prior art, and the second clamp 12 may be a suspension clamp in the prior art. In other embodiments, the tension member may alternatively be a tension fitting, or the like, in the prior art; the corresponding connecting member may be replaced according to a mounting requirement thereof; and the first clamp and the second clamp may alternatively have other clamp structures as long as a corresponding wire attaching function can be achieved, which is not specifically limited herein.

When the composite crossarm 10 is mounted, the first connecting assemblies 200 and the second connecting assembly 300 of corresponding specifications are first selected according to a size of the electric pole 20, the end fittings 140 corresponding to the two first crossarms 100 are then connected together through the first connecting assemblies 200, and the first clamps 11 are respectively mounted at two ends of the first connecting assembly 200. Then, the intermediate fittings 130 corresponding to the two first crossarms 100 are connected together through the second connecting assembly 300, and the second clamp 12 is mounted below the middle portion of the second connecting assembly 300. Then, one end of each of the two tension members 400 is connected to one of the connecting fittings 120 of the two first crossarms 100, and the first clamps 11 are respectively mounted at the other ends of the two tension members 400. Finally, the two first crossarms 100 that have been assembled preliminarily are sleeved at an appropriate position of the top of the electric pole 20, and the two first crossarms 100 are fixed to two sides of the electric pole 20 through the two connecting fittings 120 respectively. In this way, the composite crossarm 10 can be mounted and fixed on the electric pole 20, and the whole mounting process is easy and convenient to operate.

When the composite crossarm 10 attaches single circuit line three-phase conductors, the three-phase conductors include two edge phase conductors, a middle phase conductor and jumpers respectively corresponding to the three-phase conductors. The two edge phase conductors are respectively attached at two ends of the composite crossarm 10, the middle phase conductor is attached on the tension members 400 at the middle portion of the composite crossarm 10, and the jumpers extend and are attached below the composite crossarm 10. Attaching structures for the edge phase conductors are specifically described with one edge phase conductor as an example. In an extending direction of the conductor, the edge phase conductor is respectively attached on the two first clamps 11 connected to the two ends of the first connecting assembly 200 on the two sides of the electric pole 20, the edge phase jumper is led out from the first clamp 11 connected to one end of the first connecting assembly 200 and extends below the composite crossarm 10 to be attached on the first clamp 11 connected to the other end of the first connecting assembly 200. The edge phase jumper is electrically connected to the edge phase conductor on the two sides of the first connecting assembly 200. The middle phase conductor is respectively attached on the first clamps 11 connected to the end portions of the two tension members 400 on the two sides of the electric pole 20, the middle phase jumper is led out from the first clamp 11 connected to one of the tension members 400, extends below the composite crossarm 10 to be attached on the second clamp 12 at the middle portion of the second connecting assembly 300, and then extends below the composite crossarm 10 to be attached on the first clamp 11 connected to the other of the tension members 400. The middle phase jumper is electrically connected to the middle phase conductor on the two sides of the electric pole 20.

In an embodiment, one middle phase jumper point may be arranged on the composite crossarm 10. That is, one intermediate fitting 130 may be arranged on the first crossarm 100, and the bottom sides of the intermediate fittings 130 of the two first crossarms 100 are connected together by the second connecting assembly 300.

In another embodiment, as shown in FIG. 1, two middle phase jumper points may be arranged on the composite crossarm 10. That is, the first crossarm 100 may be provided with two intermediate fittings 130. The two intermediate fittings 130 are respectively located on the two sides of the connecting fitting 120. The bottom sides of the intermediate fittings 130 corresponding to the two first crossarms 100 may be connected together through the second connecting assembly 300. During attaching the conductor, one of the middle phase jumper points may be selected for fixing the jumper according to a wire attaching requirement of the power transmission pole 1000, so that the wire attaching is more flexible, and application scenarios are wider.

Further, the first crossarm 10 may be configured to be of a symmetrical structure. That is, the connecting fitting 120 is located at a midpoint of the first crossarm 100, and the two intermediate fittings 130 are respectively located at quartering points, five-equal division points, or the like, of the first crossarm 100, so that the composite crossarm 10 is stressed more uniformly after being mounted, and the structure is more stable.

In the present application, an overall length of the composite crossarm 10, lengths of the first crossarms 100, specifications of the first clamps 11 and the second clamps 12, or the like, can be correspondingly adjusted according to requirements; and a mounting order for the composite crossarm 10 can also be adjusted correspondingly according to requirements. That is, the two first crossarms 100 are first fixed on the electric pole 20, the tension members 400 are then mounted, and then, the two first crossarms 100 are connected to each other through the first connecting assemblies 200 and the second connecting assembly 300, which is not specifically limited herein.

Further, as shown in FIG. 6, the composite crossarm 10 further includes an insulating protection cover 500. The insulating protection cover 500 includes a first protection cover 510 and a second protection cover 520. The first protection cover 510 is configured to cover metal structures at the top of the electric pole 20 and an upper side of the middle portion of the composite crossarm 10. The second protection cover 520 is configured to cover metal structures on a lower side of the middle portion of the composite crossarm 10. The first protection cover 510 and the second protection cover 520 cooperate to cover the metal structures at the top of the electric pole 20 and at the middle portion of the composite crossarm 10, so as to strengthen an insulating effect on the top of the electric pole 20, and further avoid that the energized circuit is formed when the birds take off, stand on or land on the top of the electric pole 20 to cause the electric shock to the birds, thereby reducing the probability that the birds are subjected to the electric shock and die, protecting the biodiversity.

A main structure of the insulating protection cover 500 is a cuboid structure with an opening in the bottom, so that the insulating protection cover 500 can be conveniently mounted for covering; and the insulating protection cover 500 is provided with a plurality of cavities configured for insertion of portions of the composite crossarm 10 or fasteners like bolts and nuts.

A main structure of the first protection cover 510 is a cuboid structure with an opening in the bottom. After the composite crossarm 10 is mounted on the electric pole 20, a height of the cuboid structure in the vertical direction is matched with a distance between the top of the electric pole 20 and the bottom side of the first sleeve 121. A width of the cuboid structure in the extending direction of the conductor is matched with a distance between sides of the two first sleeves 121 away from each other, and a length of the cuboid structure in the length direction of the first crossarm 100 is matched with a length of the electric pole 20 in this length direction, so that material costs can be saved while the first protection cover 510 can cover the top of the electric pole 20 from top to bottom.

The first protection cover 510 is provided with a plurality of first cavities, four second cavities and two third cavities (not shown in the drawing). The plurality of first cavities are arranged corresponding to the first mounting holes on the electric pole 20, the four second cavities are arranged corresponding to mounting positions of the first crossarms 100, and the two third cavities are arranged corresponding to mounting positions of the tension members 400, which can facilitate insertion of the fasteners and the mounting of the composite crossarm 10 while the insulating effect is ensured.

Further, third protection covers 530 extend outside the second cavities of the first protection cover 510. An extending direction of each of the third protection covers 530 is the same as the length direction of the first crossarm 100, and the third protection covers 530 are configured to cover metal structures of the connecting fittings 120 protruding out of the electric pole 20 in the length direction of the first crossarm 100. Fourth protection covers 540 extend outside the third cavities of the first protection cover 510. An extending direction of each of the fourth protection covers 540 is the same as the length direction of the tension member 400, and the fourth protection covers 540 are configured to cover metal connecting structures between the tension members 400 and the connecting fittings 120. Main structures of the third protection covers 530 and the fourth protection covers 540 are also cuboid structures, and the sizes of cuboids are matched with the sizes of the corresponding metal structures that they cover.

A main structure of the second protection cover 520 is a cuboid structure with openings in the bottom and the upper portion. A length and a width of the cuboid structure are the same as those of the main structure of the first protection cover 510. A height of the cuboid in the vertical direction is matched with a distance from the bottom side of the first sleeve 121 to a bottom end of a target covering region on the electric pole 20. The second protection cover 520 is provided with a plurality of fourth cavities. The plurality of fourth cavities are arranged corresponding to the first mounting holes on the electric pole 20, which can facilitate the insertion of the fasteners while the insulating effect is ensured. The target covering region on the electric pole 20 may be adjusted according to actual covering requirements, which is not specifically limited herein.

Further, the second protection cover 520 can include two sub-protection covers 521. The two sub-protection covers 521 are of cuboid structures with openings in three surfaces. The second protection cover 520 can be formed by splicing the two sub-protection covers 521, so that the second protection cover 520 can be mounted to cover from the two sides of the electric pole 20, and the operation is simpler and more convenient.

Further, the top of the first protection cover 510 is of a pinnacle structure. That is, the main structure of the first protection cover 510, the top of each of the third protection covers 530 and the top of each of the fourth protection covers 540 are of pinnacle structures, and the tips of the pinnacle structures face upwards, so that after the first protection cover 510 is mounted, the pinnacle structures can prevent the birds from standing and staying at the top of the electric pole 20 and the middle portion of the composite crossarm 10, thus further reducing the probability of electric shock death of the birds, protecting the biodiversity. The pinnacle structures can be cone or pyramid structures, and thus are simple in structure and convenient to manufacture.

Further, the insulating protection cover 500 further includes fastener protection covers 550 configured for covering fasteners such as nuts required to be inserted during mounting of the composite crossarm 10 and the electric pole 20, which further increases a covering rate of the metal structures at the top of the electric pole 20 and the middle portion of the composite crossarm 10, thereby further enhancing the insulating effect at the top of the electric pole 20.

The insulating protection cover 500 is made of silicone rubber, which has excellent insulating property and can ensure the insulating effect of the insulating protection cover 500. Alternatively, the insulating protection cover 500 can be made of other insulating materials, which is not specifically limited herein.

In an embodiment, the insulating protection cover 500 is of a split structure. That is, the first protection cover 510 and the two sub-protection covers 521 are separately manufactured and mounted. Further, the first protection cover 510 may also be of a split structure, so that mounting thereof is more convenient and working efficiency is higher. In other embodiments, the insulating protection cover may also be of an integral structure as long as it can be mounted to cover the top of the electric pole to achieve the insulating function, which is not specifically limited herein.

The technical contents and technical characteristics of the present application have been disclosed above, but it may be understood that under the creative idea of the present application, those skilled in the art may make various changes and improvements to the above structures and materials, including combinations of technical features herein separately disclosed or claimed, and obviously including other combinations of these features. Such variants and/or combinations are within the technical field to which the application pertains and are within the protection scope claimed by claims of the present application.

## Claims

1. A composite crossarm, comprising:
two first crossarms, first middle portions of the two first crossarms being respectively fixed on two sides of an electric pole, and length directions of the two first crossarms being located in a same horizontal plane and parallel to each other;
two first connecting assemblies, corresponding end portions of the two first crossarms being connected together through the first connecting assemblies, and two ends of each first connecting assembly being respectively configured to be connected to two first clamps;
a second connecting assembly, corresponding second middle portions of the two first crossarms being connected together through the second connecting assembly, the second connecting assembly being configured to be connected to a second clamp, and the second clamp being located below the first crossarms; and
two tension members each of which has one end connected to the first middle portion of one of the two first crossarms, and the other end configured to be connected to one of the first clamps, wherein length directions of the tension members and the length directions of the first crossarms are located in the same horizontal plane and perpendicular to each other.

2. The composite crossarm according to claim 1, wherein each of the first crossarms comprises:
a core rod;
a connecting fitting connected to a first middle portion of the core rod and configured to be connected to the tension member and the electric pole;
an intermediate fitting connected to a second middle portion of the core rod and configured to be connected to the second connecting assembly;
two end fittings respectively connected to two ends of the core rod and configured to be respectively connected to the first connecting assemblies; and
an insulating layer covering at least a part of an outer periphery surface of the core rod.

3. The composite crossarm according to claim 2, wherein the connecting fitting is a cross-shaped fitting, and the connecting fitting comprises a first sleeve sleeved on the first middle portion of the core rod, and an electric pole connecting member perpendicularly connected to the first sleeve, the electric pole connecting member being configured to be connected to the electric pole.

4. The composite crossarm according to claim 3, wherein the electric pole connecting member comprises two first connecting members, the two first connecting members being perpendicularly connected to a middle portion of the first sleeve and located on two sides of the first sleeve with respect to an axial direction, respectively, and the first connecting members being configured to be connected to the electric pole.

5. The composite crossarm according to claim 4, wherein each of the first connecting members comprises a first plate member and two second plate members, the first plate member and the second plate members being perpendicularly connected to each other, wherein the two second plate members extend from two ends of the first plate member in a same direction away from the first plate member, and one end of each of the two second plate members not connected to the first plate member is perpendicularly connected to the first sleeve; the second plate member is provided with a first connecting hole configured for being connected to the electric pole.

6. The composite crossarm according to claim 3, wherein a tension connecting portion is arranged on a side of the first sleeve away from the electric pole, and the tension connecting portion is provided with a second connecting hole configured to be connected to the tension member.

7. The composite crossarm according to claim 1, wherein each of the tension members is a tension composite insulator or a tension fitting.

8. The composite crossarm according to claim 2, wherein the intermediate fitting comprises a second sleeve sleeved on the second middle portion of the core rod, and a second connecting member connected to a bottom side of the second sleeve, wherein the second connecting member is provided with third connecting holes configured to be connected to the second connecting assembly.

9. The composite crossarm according to claim 2, wherein each of the end fittings comprises an end sleeve sleeved on an end portion of the core rod, and a third connecting member connected to a top end of the end sleeve, wherein the third connecting member is provided with fourth connecting holes configured to be connected to the first connecting assembly.

10. The composite crossarm according to claim 1, further comprising an insulating protection cover configured to cover metal structures at a top of the electric pole and at a middle portion of the composite crossarm.

11. The composite crossarm according to claim 10, wherein the insulating protection cover comprises: a first protection cover configured to cover metal structures at the top of the electric pole and an upper side of the middle portion of the composite crossarm; and a second protection cover configured to cover metal structures on a lower side of the middle portion of the composite crossarm, wherein a top of the first protection cover is of a pinnacle structure.

12. The composite crossarm according to claim 1, wherein the composite crossarm is configured to attach conductors and jumpers, wherein the jumpers extend below and are attached below the composite crossarm.

13. The composite crossarm according to claim 12, wherein the conductors comprise a middle phase conductor, the middle phase conductor being respectively attached on the first clamps connected to the two tension members on two sides of the electric pole, wherein a middle phase jumper is led out from one of the first clamps connected to one of the tension members, extends below the composite crossarm to be attached on the second clamp, and then extends below the composite crossarm to be attached on the other of the first clamps connected to the other of the tension members; and the middle phase jumper is electrically connected to the middle phase conductor.

14. The composite crossarm according to claim 12, wherein the conductors comprise edge phase conductors, each of the edge phase conductors being respectively attached on the two first clamps connected to the two ends of the first connecting assembly on the two sides of the electric pole, wherein an edge phase jumper is led out from one of the first clamps connected to one end of the first connecting assembly and extends below the composite crossarm to be attached on the other of the first clamps connected to the other end of the first connecting assembly; and the edge phase jumper is electrically connected to the edge phase conductor.

15. A power transmission pole, comprising an electric pole and the composite crossarm according to any one of claims 1 to 14, the composite crossarm being fixed on the electric pole.
